# EUROPEAN PATENT SPECIFICATION

(11) **EP 1 239 927 B1**
(45) Date of publication and mention of the grant of the patent: **27.04.2005**
(21) Application number: 00962360.4
(22) Date of filing: 21.08.2000
(51) Int. Cl.: A62D 3/00, C04B 28/02, C04B 22/16, B09B 3/00, C04B 18/02

(54) **PROCESS FOR IMMOBILISING TOXIC METALS IN SOLID INDUSTRIAL RESIDUES**
VERFAHREN ZUM IMMOBILISIEREN VON GIFTIGEN METALLEN IN FESTEN INDUSTRIELLEN ABFÄLLEN
PROCEDE D'IMMOBILISATION DE METAUX TOXIQUES DANS DES RESIDUS INDUSTRIELS SOLIDES

(30) Priority: 20.08.1999 EP 99202711
(43) Date of publication of application: 18.09.2002
(73) Proprietor: Stramproy Development & Licensing B.V., 6039 AP Stramproy (NL)
(72) Inventor: DUIJN, Cornelis, Gerardus, Sebastiaan, NL-1964 PC Heemskerk (NL); WEBER, Johan, Jurriaan, NL-3603 GM Maarssen (NL)
(74) Representative: Aalbers, Arnt Reinier
(86) International application number: PCT/EP2000/008210
(87) International publication number: WO 2001/014014

(56) References cited:
- EP-A- 0 109 506
- EP-A- 0 369 946
- EP-A- 0 800 871
- GB-A- 2 130 783
- US-A- 4 737 356
- US-A- 5 284 636

## Description

The invention pertains to a process for immobilising toxic metals in solid industrial residues, such as fly ash, bottom ash and filter cake, wherein the solid residues are contacted with a phosphate and a cement.

In the field of waste management, solid industrial residues (defined as residues with ≥ 20% (m/m) dry weight), such as fly ash and bottom ash from incinerators and filter cake from waste water treatment plants or air pollution control systems, form a substantial part of the total waste generated by contemporary industrial society.

The disposal of such residues should not have a harmful effect on the ecosystem. An efficient way of achieving this is to immobilise (i.e., reduce leaching of) toxic metals, such as arsenic, cadmium, copper, iron, lead, manganese, nickel and zinc, contained in these residues to such an extent that the residues can be utilised in building projects, landfills, road construction or other civil engineering projects.

Compared to treatment with liquid additives, especially liquid acids, that are used in some processes already known for the treatment of solid industrial residues, the treatment of solid industrial residues with dry additives permits the use of relatively cheap plants.

A method for immobilising lead and cadmium is, for instance, described in European patent 0 335 024. This publication discloses a method of treating solid industrial residues from combustion of refuse, especially fly ash and mixtures containing fly ash, with phosphoric acid and lime so as to reduce the leaching of cadmium and lead from such residues to a level below the toxic level specified by the United States Environmental Protection Agency.

In the method according to EP 0 335 024, free flowing industrial solid residues, comprising fly ash and mixtures of fly ash and bottom ash resulting from the incineration of solid wastes, are contacted with at least one water soluble phosphate in the presence of lime. Within the framework of the said document, water soluble phosphates are defined as phosphates soluble in water at about 20°C at least to the extent of about five weight-volume percent, i.e. the solubility of the phosphates in water should be in excess of 5 g/100ml.

Although such a process is effective over a broad pH range and results in a substantial reduction of leaching of lead and cadmium, the immobilised residues still can pose a threat to the environment due to the leaching of the said phosphates.

The leaching of phosphates can, to a certain extent, be suppressed by careful assessment of the required amounts of phosphate and by thorough mixing of the phosphates and the residues over extended periods of time. However, both of these measures result in higher costs, whereas the major advantage of the immobilising technology in hand resides in the cost-effective disposal of toxic waste. Thus, the economical feasibility and, consequently, the likelihood that immobilisation is employed are at risk.

European patent application 0 800 871 concerns waste disposal material and a method for stabilising wastes containing toxic heavy metals such as lead, cadmium, mercury, chromium and nickel in order to prevent these metals from exuding from the wastes, especially alkaline fly ash discharged from waste incinerators, not only on the course of disposal thereof but also after being left to stand for long. The method according to EP 0 800 871 results in a solidified, continuous mass or block.

European patent application 0 369 946 relates to a process for immobilising wastes wherein (a) a mixture which contains at least fly ash and/or residues from flue gas purification and/or heavy metal hydroxide sludge is prepared and mixed for 5 to 15 minutes in an intensive mixer and (b) at least cement is then added to the mixture.

The invention aims to provide a robust and cost effective immobilisation process which yields a product suitable for use in civil engineering projects.

To this end the process for immobilising toxic metals according to the invention is characterised in accordance with claim 1. It is preferred that the cement is added in an amount in a range from 6 to 16 weight percent (relative to the said solid residues).

In countries and regions where (relatively) little space is available for storing the mentioned residues legislation is usually more stringent than the rules used by the above-mentioned Environmental Protection Agency. Thus, there is a need for a process for immobilising ash as well as other industrial residues, wherein the leaching of toxic metals is reduced to a level that meets the demands of the legislation of, e.g., various European countries.

This is achieved in a preferred embodiment of process according to the present invention, wherein the phosphate has a solubility in water in the range from 0.01 to 5.0 g/100ml (determined in accordance with the Handbook of Chemistry and Physics, CRC Press, 60th edition), preferably in a range from 0.02 to 4.5 g/100ml.

As will be shown in the examples below, the combination of cement and phosphates having a solubility in water in the range from 0.01 to 5.0 g/100ml (and preferably in a range from 0.02 to 4.5 g/100ml) yields very low leaching of toxic metals.

Phosphates of calcium, sodium or magnesium are preferred. Very suitable (inorganic) phosphates with a solubility in cold water of in a range from 0.010 to 5.0 gram per 100 ml are, for example, calciumhydrogenphosphate CaHPO₄.2H₂O (0.0316 g/100ml), calciumdihydrogenphosphate Ca(H₂PO₄)₂.H₂O (1.8 g/100ml), sodiumphosphate Na₃PO₄.12H₂O (1.5 g/100ml) disodiumhydrogenphosphate Na₂HPO₄.12H₂O (4.15 g/100ml), magnesiumhydrogenphosphate Mg₃(PO₄)₂.4H₂O (0.0205 g/100ml) magnesiumhydrogenphosphate MgHPO₄.7H₂O (0.3 g/100ml). The physical form to be used is preferably either a powder or a fine granular product with grain size < 4 mm, preferably < 2 mm.

Preferred cements are portlandcement (CEM I), portlandcomposite cement (CEM II) or iron blast furnace cement (CEM III) or special cements like aluminium cement. Of these cements all varieties existing with regard to fineness can be used: 32.5, 42.5, 52.5 or other. A finer variety will usually result in a slightly lower level of addition. The selection of a certain cement will, however, usually depend largely on local availability and price.

The amount of water present in the solid residues should also be such that a granular product is obtained or maintained. It is preferred that the amount of water in the mixture is in a range from 15 to 30 weight percent (relative to dry solid residues). The amount of water which has to be added to the solid residues varies significantly. Fly ash, for instance, usually has a humidity of 0 - 0.5% and hence requires addition of water in accordance with the above-mentioned ranges. In contrast, bottom ash typically has a humidity of roughly 20% and hence requires no addition of water. In more general terms, the amount of water is preferably such that a so-called earth dry mixture is obtained, i.e. such that the mixture does not reach a slurry or plastic phase.

Gypsum, i.e. CaSO₄, is a commonly used additive to cement. In the process according to the present invention, the anhydrous form of gypsum, i.e. CaSO₄ without crystalline water, can be used as a drying agent for those ashes or other industrial residues that are otherwise too wet to produce an aggregate.

Also, water glass, i.e. Na₂O.xSiO₂ (x=3-5), can be used as an additive to cement for those ashes and other residues that are otherwise too wet to produce an aggregate, or that contain high levels of fine material (in general particles < 125 µm; in particular particles < 2 µm) that would otherwise harm the cement reaction.

The process according to the invention results in an aggregate that can be used as a filler in civil engineering projects instead of natural aggregates. It is preferred that solid residues having a fraction of at least 10 weight percent of particles smaller than 125 µm are granulated and immobilised simultaneously resulting in a product having less than 10 weight percent, preferably less than 3 weight percent, of particles smaller than 125 µm.

Alternatively, the produced aggregate can be compressed at the site of utilisation using equipment commonly used in road construction. After compression, the aggregate will solidify into a monolayer with a compressive strength equal to a sand-cement stabilisation or to a low concrete quality depending on the demands of the civil engineering design for the construction in which the treated material is utilised. The compressive strength to be attained can be met by adjustment of the level of additives, with adequate leaching behaviour over a broad range of addition levels.

The invention uses the ability of phosphate to form stable and, at pH ≥ 5, insoluble metal-phosphate complexes, and the ability of cement to cover the thus formed metal-phosphate complexes as well as residual unreacted material with a tiny cement layer that forms an additional impediment to leaching. The addition of cement is especially effective in reducing the leaching of amphoteric metals such as zinc, where conventional processes using lime encounter increased leaching when the pH is raised to >10. The process of the invention actually decreases the leaching of zinc, even at pH 10, 11, and 12 or higher.

Further, due to the low solubility, the amount of phosphate in solution will not block or harm the cement reaction.

Also, the invention assures that only those metal-phosphate complexes are formed that have a very low solubility. This is true, because the thermodynamics of solution chemistry determine that, in presence of slightly soluble phosphate, the formation of other phosphate complexes will only be favoured by a pull coming from the sedimentation reaction of the toxic metal-phosphate complex having very low solubility (the solubility of a toxic metal complex is much lower than the solubility of the phosphate used as a reagent).

The mechanism presented above is supported by the observation that, having found a level of additions that is sufficient to reduce leaching, a higher level of additions does not necessarily yield still lower leaching values.

Especially extra phosphate addition can be counterproductive. Optimisation of the process therefore involves finding the optimum levels of addition of phosphate and cement, and sometimes replacing one particular phosphate by another phosphate with slightly different solubility and pH.

The invention will now be illustrated by way of a number of unlimitative examples. Unless indicated otherwise, percentages are weight percentages (m/m).

### Comparative Example 1

Fly ash from Flanders, Belgium, having a very high alkalinity (7.1 equivalent base per gram dry ash) was treated using water-soluble phosphate, in this case a solution of 85% phosphoric acid in water. The following recipes were used:
A: 3.5% phosphoric acid (85%), 3.0% Ca(OH)₂, 16.0% water
B: 5.5% phosphoric acid (85%), 16.7% water
C: 7.4% phosphoric acid (85%), 1.0% Ca(OH)₂, 16.9% water
D: 12.0% phosphoric acid (85%), 15.8% water

Table 1 gives the leaching results of fly ash in mg/l, determined by EN 12457 procedure B (Liquid/Solid ratio or LS = 10), which procedure is equivalent to German DIN 38414 (S4 test). "VLAREA" gives the most recent legal limits in Belgium expressed in mg/kg dw. To facilitate interpretation of the data in Table 1, the "VLAREA" limits were converted to mg/l.

### Example 2

The same fly ash as used in Example 1 was treated, this time in accordance with the present invention. The following recipe was used:
E: 10 % calciumhydrogenphosphate CaHPO₄.2H₂O (solubility in water: 0.03 g/100ml), 10 % cement (CEM I 52.5 R) and 34 % water.

Use of 20 % dry additives complies with the legally determined maximum of 25 % (m/m). The Belgian legislator considers any process using higher levels of additives to be a dilution process and, therefore, will not allow it. The water is needed to facilitate the immobilisation reaction; it does not dilute the residues (because leaching behaviour is always related to dry weight) or extract the toxic metals.

Table 1 gives the leaching results of fly ash in mg/l, determined by EN 12457 procedure B (LS=10).

**Table 1**

| | Untr. sample | VLAREA | A Ex. 1 | B Ex. 1 | C Ex. 1 | D Ex. 1 | E Ex. 2 (inv.) |
|---|---|---|---|---|---|---|---|
| Arsenic | 0.10 | 0.08 | <0.02 | 0.02 | 0.04 | <0.01 | <0.002 |
| Cadmium | 0.80 | 0.003 | 0.0003 | 0.0002 | 0.0003 | 0.0002 | 0.0005 |
| Copper | <1.0 | 0.05 | 0.02 | 0.02 | 0.04 | 0.01 | 0.012 |
| Lead | 4.15 | 0.13 | 79 | 81 | 11 | 26 | 0.02 |
| Nickel | 0.10 | 0.075 | 0.03 | 0.03 | <0.01 | <0.05 | <0.002 |
| Zinc | 10.68 | 0.28 | 4.9 | 4.6 | 3.1 | 3.2 | 0.21 |

The results in Table 1 clearly show the considerable improvement provided by recipe H (according to the invention). Furthermore, this recipe is the only one that yields a product within the legal limits.

### Example 3

Fly ash from an incinerator in Italy was extensively tested and the minimum level of additives was established to be 6% calciumdihydrogenphosphate Ca(H₂PO₄)₂.H₂O, 8% cement and 20% water (recipe F). Leaching was determined by means of an Italian test involving the addition of 0.5 M acetic acid solution. The method of leaching as well as legal limits to be met are described in 'Tabella A' of the 'legge 24 dicembre 1979, n. 650' (issued by ANIMA in February 1980). As shown in table 2, the product did meet the 10 times Tabella A special category for fly ash.

**Table 2.**

| Leaching results of fly ash in mg/l determined by Italian leaching test using 0.5 M acetic acid. | | | |
|---|---|---|---|
| | Untreated sample | Legal limit 10* Tabella A | F (inv.) |
| Cadmium | 10 | 0.2 | 0.13 |
| Copper | 5.9 | 1.0 | 0.007 |
| Lead | 4.1 | 2.0 | 0.013 |
| Manganese | 2.1 | 20 | 0.069 |
| Nickel | 0.24 | 20 | 0.019 |
| Zinc | 240 | 5 | 0.056 |

In this preferred embodiment of the process according to the invention, leaching meets Italian legal limits for fly ash and (in comparison to the leaching of the untreated fly ash) a reduction in leaching is accomplished by a factor 77 for cadmium, 840 for copper, 315 for lead, 3 for manganese, 13 for nickel and 4300 for zinc, using a total of only 14% dry additives.

### Example 4

Bottom ash originating from a municipal solid waste incinerator was treated at the incinerator by an upgrading process removing the oversize material (>40 mm), scrap metal as well as non-ferro metal. However, small scrap and small non-ferro (in general: < 10 mm) was not completely removed resulting in an amount of metals, especially fine copper particles, still present being in the ash.

The ash contained 82 % dry solids and 18 % water (i.e. 22 weight percent relative to dry solids) was treated with cement (CEM 11 B/M 32.5) and phosphate (monocalcium phosphate Ca(H₂PO₄)₂), in accordance with the following recipes (additives relative to original bottom ash:
A: original bottom ash
B: original bottom ash passing through mixing installation without additives
C: 6.5% cement and 4.0% phosphate
D: 8.0% cement and 3.0% phosphate
E: 8.0% cement and 4.0% phosphate
F: same recipe as E; mixing apparatus set at twice the power used in exp. B, C, D and E.

The samples were cured at ambient temperature and pressure and kept at constant humidity. Leaching was determined using the same method as in Example 3. Leaching results are presented in table 3 below. Concentration in leachate in mg/l (the legal limit in accordance with 'Tabella A' is presented in parentheses).

**Table 3.**

| Leaching results of bottom ash | | | | | | |
|---|---|---|---|---|---|---|
| | A | B | C | D | E | F |
| curing time | - | 10 d | 19 d | 10 d | 10 d | 19 d |
| pH leachate | - | 7.55 | 6.84 | 8.89 | 7.89 | 7.76 |
| cadmium (0.02) | - | 0.026 | 0.0067 | 0.0002 | 0.0008 | 0.0011 |
| copper (0.1) | - | 0.74 | 0.19 | 0.28 | 0.24 | 0.18 |
| zinc (0.5) | - | 3.1 | 0.14 | <0.005 | 0.008 | 0.034 |

The results in table 3 demonstrate that leaching of treated ash (samples C up to F) is within legal limits for cadmium and zinc. The leaching for copper is significantly reduced. However, legislation requires a (slight) increase of the amount of cement and/or phosphate or, alternatively, a longer curing time.

Sample B has lower copper leaching than sample D which is lower in phosphate; samples C and F with longer curing time than sample B exhibit even lower copper leaching. This has led to more experiments, see example 5.

Although a substantial amount of cement was used, the dry mixing process did not result in solidification. Table 4 below gives the cumulative size distribution of samples A,B, and F and of samples obtained with the following recipes:
G: 7.5% cement and 4.0% phosphate
H: 8.5% cement and 4.0% phosphate

**Table 4:**

| Cumulative size distribution of bottom ash | | | | | |
|---|---|---|---|---|---|
| | A | B | F | G | H |
| 31.5 mm | 0.0 | 0.0 | 0.0 | 0.0 | 0.0 |
| 16 mm | 3.0 | 0.1 | 2.7 | 0.0 | 0.0 |
| 8 mm | 20.5 | 8.1 | 15.8 | 11.1 | 9.7 |
| 4 mm | 49.6 | 31.7 | 36.7 | 34.6 | 30.8 |
| 2 mm | 72.8 | 61.8 | 59.8 | 57.9 | 55.0 |
| 1 mm | 87.5 | 78.3 | 78.4 | 74.9 | 74.0 |
| 500 µm | 94.6 | 87.4 | 92.1 | 89.3 | 89.8 |
| 250 µm | 97.7 | 93.0 | 97.8 | 96.3 | 96.6 |
| Index fineness | 5.2 | 4.6 | 4.8 | 4.6 | 4.5 |

Index fineness: sum of cumulative percentage on each of the following sieves: 63 mm, 31.5 mm, 16 mm, 8 mm, 4 mm, 2 mm, 1 mm, 500 µm, 250 µm and 125 µm; sum divided by 100 and rounded to 1 decimal (Standaard RAW Bepalingen 1995 test procedure 18; CROW, Galvanistraat 1, Ede, The Netherlands).

### Example 5

Bottom ash from the same municipal solid waste incinerator as in example 4 was treated using the following recipes (additives relative to original bottom ash = 100)
H: 8.0% cement and 4.0% phosphate
I: 8.0% cement and 5.0% phosphate
J: 8.0% cement and 6.0% phosphate
K: 8.0% cement, 5.0% phosphate and 0.5% sodium silicate ('water glass')
L: 8.0% cement, 5.0% phosphate and 1.0% sodium silicate ('waterglass')

Recipes H, I and J were tested after a short and a long curing time; recipes K and L were tested after short curing time only. Results are presented in tables 3 and 4 below. Concentration in leachate in mg/l (the legal limit in accordance with 'Tabella A' is presented in parentheses; - means 'not analysed').

**Table 5.**

| Leaching results bottom ash (short curing time) | | | | | |
|---|---|---|---|---|---|
| | H | I | J | K | L |
| curing time | 12 d | 4 d | 4 d | 15 d | 15 d |
| pH leachate | 7.07 | 7.46 | 7.07 | 7.37 | 7.43 |
| cadmium (0.02) | 0.0027 | 0.003 | 0.0017 | 0.0009 | 0.0010 |
| copper (0.1) | 0.19 | 0.19 | 0.15 | 0.11 | 0.13 |
| lead (0.2) | - | - | - | 0.001 | 0.001 |
| zinc (0.5) | 0.048 | 0.093 | 0.078 | 0.022 | 0.019 |

**Table 6.**

| Leaching bottom ash example 2 (long curing time) | | | |
|---|---|---|---|
| | H | I | J |
| curing time | 86 d | 65 d | 65 d |
| pH leachate | 7.70 | 6.92 | 6.77 |
| cadmium(0.02) | 0.0011 | 0.0015 | 0.0011 |
| copper (0.1) | 0.15 | 0.13 | 0.11 |
| zinc (0.5) | 0.048 | 0.073 | 0.038 |

Results in table 6, samples H, I and J demonstrate that a higher addition of phosphate reduces copper leaching. After longer curing time these samples show even lower leaching, sample J approximately reaching the legal limit after 65 days curing time.

However, addition of a small amount of a strong base such as sodium silicate (samples K and L) results in faster curing resulting in the same or even lower copper leaching after 15 days than sample I (same amount cement and phosphate) after 65 days curing time.

As can be seen in table 5 the addition of a strong base (samples K and L) does not effect the already well known effect of phosphate on the immobilisation of lead.

### Example 6

Fly ash originating from a municipal solid waste incinerator was treated with cement (CEM 11 B/M 32.5), phosphate (monocalcium phosphate CaH2PO4) and water.

The following recipes were used (additives relative to fly ash)
M: original fly ash
N: 8.0% cement, 6.0% phosphate and 20% water
O: 8.0% cement, 5.0% phosphate and 18% water
P: 10.0% cement, 5.0% phosphate and 22% water
Q: 12.0% cement, 3.0% phosphate and 22% water

The samples were cured at ambient temperature and pressure and kept at constant humidity. Leaching results are presented in table 5 below. Concentration in leachate in mg/l (special legal limit for fly ash, 10 times 'Tabella A').

**Table 7:**

| Leaching results of fly ash | | | | | |
|---|---|---|---|---|---|
| | M | N | O | P | Q |
| curing time | - | 10 d | 10 d | 21 d | 21 d |
| pH leachate | 7.25 | 8.22 | 8.56 | 9.28 | 9.92 |
| cadmium(0.2) | 13 | 0.77 | 0.38 | 0.33 | 0.046 |
| copper (1.0) | 0.17 | 0.007 | 0.004 | 0.003 | 0.003 |
| lead (2.0) | - | - | - | 0.034 | 0.032 |
| zinc (5.0) | 150 | 0.37 | 0.14 | 0.059 | 0.030 |

The results in table 7 demonstrate that the leaching of untreated fly ash exceeds the legal limits for cadmium and zinc. In all treated samples the leaching of zinc is reduced to well below the legal limit. In the treated sample Q cadmium leaching is reduced to well below the legal limit as well. As can be seen from the relation between cadmium leaching and pH, cadmium leaching could be further reduced by an extra addition of a strong base such as sodium silicate just as demonstrated in example 5.

The untreated fly ash is a waste material containing a significant fraction fine particles. As fly ash, apart from leachable toxic metals, contains high concentration of chloride as well, the fly ash has to be washed after immobilisation. In the washing process, fine particles are a nuisance. The immobilisation process was therefore optimised beforehand to ensure granulation occurring simultaneously with immobilisation. As a result, the treated fly ash has a cumulative size distribution similar to an aggregate. The results of cumulative size distribution, determined by mechanical dry sieving according to EN 933-1 is summarised in table 8.

**Table 8:**

| Cumulative size distribution of fly ash | | | | | |
|---|---|---|---|---|---|
| | M | N | O | P | Q |
| 31.5 mm | | 0.0 | 0.0 | 0.0 | 0.0 |
| 16 mm | | 7.2 | 11.5 | 2.9 | 0.7 |
| 8 mm | | 14.6 | 16.7 | 12.1 | 5.2 |
| 4 mm | | 20.1 | 22.7 | 21.2 | 12.7 |
| 2 mm | 0.0 | 30.3 | 31.4 | 35.3 | 40.9 |
| 1 mm | 0.0 | 62.1 | 44.7 | 65.7 | 82.4 |
| 500 µm | 6.7 | 86.2 | 72.8 | 89.7 | 93.5 |
| 250 µm | 25.4 | 96.2 | 92.9 | 96.8 | 97.7 |
| 125 µm | 58.7 | 99.2 | 98.3 | 99.0 | 99.2 |
| 63 µm | 79.2 | 99.7 | 99.6 | 99.6 | 99.6 |
| Index fineness | 0.9 | 4.2 | 3.9 | 4.2 | 4.3 |

The results in table 8 demonstrate that the immobilised fly ash N, O, P and Q have a cumulative size distribution very different from the original fly ash M. The original fly ash has only 25.4% particles >250 µm and only 58.7% particles >125 µm whereas immobilised fly ash is granulated to an aggregate with between 93 and 98% particles >250 µm and between 98 and 99% particles >125 µm.

The invention is not restricted to above described embodiments, which can be varied in a number of ways within the scope of the claims. More particularly, the invention is valid for any type of residue that is mostly inorganic and that does leach toxic metals in such high levels that the residue is regarded as a hazardous waste, which has to be stored in a controlled depository.

## Claims

1. Process for immobilising toxic metals in solid industrial residues, such as fly ash, bottom ash and filter cake, wherein the solid residues are contacted with a phosphate, having a solubility in water in a range from 0.01 to 5.0 g/100ml, and a cement as defined in NEN 3550:1995 NL, **characterised in that** the humidity of the solid residues is in a range from 10 to 40 weight percent and the cement is added to the solid residues in an amount in a range from 4 to 20 weight percent such that a granular product is obtained.

2. Process according to claim 1, wherein the cement is added in an amount in a range from 6 to 16 weight percent.

3. Process according to claim 1 or 2, wherein the cement is portlandcement, portlandcomposite cement, iron blast furnace cement or aluminium cement.

4. Process according to any one of the preceding claims, wherein the phosphate has a solubility in water in a range from 0.02 to 4.5 g/100ml.

5. Process according to claim 4, wherein the phosphate is a phosphate of calcium, sodium or magnesium.

6. Process according to any one of the preceding claims, wherein the phosphate is added to the solid residues as a powder or a fine granular product with particle size smaller than 4 mm, preferably smaller than 2 mm.

7. Process according to any one of the preceding claims, wherein the humidity of the solid residues is in a range from 15 to 30 weight percent (relative to dry solid residues).

8. Process according to any one of the preceding claims, wherein a mixture of phosphate, waterglass and cement is added to the solid residues.

9. Process according to any one of the preceding claims, wherein the treated residues are compressed into a compacted building material, preferably at the construction site.

10. Process according to any one of the preceding claims, wherein a mixture of phosphate, gypsum and cement is added to the solid residues.

11. Process according to any one of the preceding claims, wherein solid residues having a fraction of at least 10 weight percent of particles smaller than 125 µm are granulated and immobilised simultaneously resulting in a product having less than 10 weight percent, preferably less than 3 weight percent, of particles smaller than 125 µm.

## Patentansprüche

1. Verfahren zur Immobilisierung von toxischen Metallen in festen Industrierückständen, wie z.B. Flugasche, Bettasche und Filterkuchen, wobei die festen Rückstände mit einem Phosphat mit einer Wasserlöslichkeit in einem Bereich von 0.01 bis 5.0 g/100 ml und einem Zement, wie in NEN: 3550:1995 NL definiert, in Kontakt gebracht werden, **dadurch gekennzeichnet, dass** die Feuchtigkeit der festen Rückstände in einem Bereich von 10 bis 40 Gew.-% liegt und der Zement in einer Menge in einem Bereich von 4 bis 20 Gew.-% zu den festen Rückständen hinzugegeben wird, so dass ein körniges Produkt erhalten wird.

2. Verfahren gemäß Anspruch 1, wobei der Zement in einer Menge in einem Bereich von 6 bis 16 Gew.-% hinzugegeben wird.

3. Verfahren gemäß Anspruch 1 oder 2, wobei der Zement Portlandzement, Portlandzementgemisch, Eisen-Hochofenzement oder Aluminiumzement ist.

4. Verfahren gemäß einem der vorangegangenen Ansprüche, wobei das Phosphat eine Wasserlöslichkeit in einem Bereich von 0.02 bis 4.5 g/100 ml hat.

5. Verfahren gemäß Anspruch 4, wobei das Phosphat ein Calcium-, Natrium- oder Magnesiumphosphat ist.

6. Verfahren gemäß einem der vorangegangenen Ansprüche, wobei das Phosphat als ein Pulver oder feinkörniges Produkt mit einer Teilchengröße kleiner als 4 mm, bevorzugt kleiner als 2 mm, zu den festen Rückständen hinzugegeben wird.

7. Verfahren gemäß einem der vorangegangenen Ansprüche, wobei die Feuchtigkeit der festen Rückstände in einem Bereich von 15 bis 30 Gew.-% (relativ zu trockenen, festen Rückständen) liegt.

8. Verfahren gemäß einem der vorangegangenen Ansprüche, wobei eine Mischung aus Phosphat, Wasserglas und Zement zu den festen Rückständen hinzugegeben wird.

9. Verfahren gemäß einem der vorangegangenen Ansprüche, wobei die behandelten Rückstände zu einen kompakten Baustoff verdichtet werden, bevorzugt an der Baustelle.

10. Verfahren gemäß einem der vorangegangenen Ansprüche, wobei eine Mischung aus Phosphat, Gips und Zement zu den festen Rückständen hinzugegeben wird.

11. Verfahren gemäß einem der vorangegangenen Ansprüche, wobei die festen Rückstände mit einem Anteil von wenigstens 10 Gew.-% an Teilchen, die kleiner als 125 µm sind, granuliert und gleichzeitig immobilisiert werden, was zu einem Produkt mit weniger als 10 Gew.-%, bevorzugt weniger als 3 Gew.-% an Teilchen, die kleiner als 125 µm sind, führt.

## Revendications

1. Procédé pour l'immobilisation de métaux toxiques dans des résidus industriels solides, tels que des cendres volantes, des cendres de fond et des gâteaux de filtre, dans lequel les résidus solides sont mis en contact avec un phosphate ayant une solubilité dans l'eau dans une plage de 0,01 jusqu'à 5,0 g/100 ml, et un ciment tel que défini dans NEN 3550:1995 NL, **caractérisé en ce que** l'humidité des résidus solides se situe dans une plage allant de 10 à 40 pour-cent en poids et le ciment est ajouté aux résidus solides dans une quantité allant dans une plage de 4 à 20 pour-cent en poids, de telle sorte que l'on obtient un produit granulaire.

2. Procédé selon la revendication 1, dans lequel le ciment est ajouté dans une quantité se situant dans une plage allant de 6 à 16 pour-cent en poids.

3. Procédé selon la revendication 1 ou 2, dans lequel le ciment est du ciment portland, un ciment composite portland, du ciment de haut fourneau sidérurgique ou du ciment d'aluminium.

4. Procédé selon l'une quelconque des revendications précédentes, dans lequel le phosphate présente une solubilité dans l'eau dans une plage allant de 0,02 à 4,5 g/100 ml.

5. Procédé selon la revendication 4, dans lequel le phosphate est un phosphate de calcium, de sodium ou de magnésium.

6. Procédé selon l'une quelconque des revendications précédentes, dans lequel le phosphate est ajouté au résidu solide en tant que poudre ou produit granulaire fin avec une taille particulaire inférieure à 4 mm, de préférence inférieure à 2 mm.

7. Procédé selon l'une quelconque des revendications précédentes, dans lequel l'humidité des résidus solides se situe dans une plage allant de 15 à 30 pour-cent en poids (par rapport aux résidus solides secs).

8. Procédé selon l'une quelconque des revendications précédentes, dans lequel on ajoute un mélange de phosphate, de verre soluble et de ciment aux résidus solides.

9. Procédé selon l'une quelconque des revendications précédentes, dans lequel les résidus traités sont compressés en un matériau de construction compacté, de préférence sur le site de construction.

10. Procédé selon l'une quelconque des revendications précédentes, dans lequel on ajoute un mélange de phosphate, de gypse et de ciment aux résidus solides.

11. Procédé selon l'une quelconque des revendications précédentes, dans lequel les résidus solides ayant une fraction d'au moins 10 pour-cent en poids de particules inférieures à 125 µm sont granulés et immobilisés simultanément, donnant un produit ayant moins de 10 pour-cent en poids, de préférence moins de 3 pour-cent en poids de particules inférieures à 125 µm.
